# FASCICULE DE BREVET EUROPEEN

(11) **EP 2 599 385 B1**
(45) Date de publication et mention de la délivrance du brevet: **01.06.2016**
(21) Numéro de dépôt: 12187593.4
(22) Date de dépôt: 08.10.2012
(51) Int. Cl.: A01K 95/02, A01K 91/047

(54) **Dispositif porte plomb**
Bleihalterungsvorrichtung
Angling rig lead clip

(30) Priorité: 30.11.2011 FR 1160950
(43) Date de publication de la demande: 05.06.2013
(73) Titulaire: Wilddis, 59150 Wattrelos (FR)
(72) Inventeur: Amourelle, Olivier, 7520 Templeuve (FR)
(74) Mandataire: Balesta, Pierre

(56) Documents cités:
- EP-A2- 1 264 542
- FR-A1- 2 871 659
- GB-A- 2 451 361
- US-A- 5 150 540

## Description

### Arrière-plan de l'invention

La présente invention a pour objet un dispositif porte-plomb. Elle trouve en particulier une application pour la pratique de la pêche, et plus particulièrement pour la pratique de la pêche à la carpe.

On connaît déjà des dispositifs porte-plomb, destinés à être fixés à une ligne de canne à pêche, tout en permettant la fixation d'un plomb à proximité de l'hameçon de la canne à pêche. Ce type de dispositif porte-plomb comprend un corps présentant un axe longitudinal, pourvu d'une ouverture traversante s'étendant selon cet axe longitudinal et destiné à permettre le passage de la ligne de la canne à pêche. Un tel dispositif porte-plomb comprend également une partie de fixation, composée, d'une part, d'une boucle excentrée par rapport à l'axe longitudinal du corps, formée par une patte, et, d'autre part, d'une cavité cylindrique traversante, s'étendant également selon l'axe longitudinal du corps, et connectée à l'ouverture du corps. La patte est constituée de deux extrémités, une première extrémité fixée à la cavité, une seconde extrémité libre qui s'étend le long du corps du dispositif. La cavité cylindrique est destinée à recevoir un émerillon lié, d'une part, à la ligne montée sur le moulinet de la canne à pêche, et d'autre part, au bas de ligne, sur lequel sont accrochés l'hameçon et l'appât permettant d'attraper le poisson.

Un tel dispositif porte-plomb est en particulier décrit dans le document EP 1 264 542.

Un plomb peut ainsi être accroché à un tel dispositif, la patte du dispositif passant, par son extrémité libre, à travers un élément de fixation disposé sur le plomb.

La patte peut être solidarisée au dispositif porte-plomb par un capuchon qui recouvre à la fois l'une des extrémités du corps du porte-plomb et l'extrémité libre de la patte.

De manière traditionnelle, l'extrémité du corps destinée à être recouverte par un capuchon est de type queue de sapin ; le capuchon est constitué d'une matière déformable qui peut recouvrir à la fois le capuchon et l'extrémité libre de la patte qui s'étend le long du corps. Ainsi, une fois qu'un plomb est accroché à la patte du dispositif, le pêcheur dispose le capuchon sur l'extrémité du corps, afin de maintenir le plomb solidaire de l'ensemble.

En fonction du poisson que le pêcheur cherche à appâter, la masse du plomb accroché peut varier.

Une fois le plomb accroché à la ligne de la canne à pêche par l'intermédiaire du dispositif porte-plomb, le pêcheur saisit le manche de la canne à pêche et, au moyen d'un mouvement de balancier de l'arrière vers l'avant, lance le bas de ligne comportant l'hameçon, l'appât, le dispositif porte-plomb, le plomb et l'émerillon sur la surface de la rivière. Le bas de la ligne reste lié à la canne à pêche par l'intermédiaire du fil de ligne qui se déroule depuis le moulinet de la canne à pêche.

Le lestage par le plomb permet au lancer d'éloigner l'hameçon du bord de la rivière ; en outre, il permet à l'hameçon de s'enfoncer dans les profondeurs de la rivière, permettant au plomb, à l'hameçon et à l'appât d'atteindre le fond où évoluent les poissons convoités par le pêcheur.

En outre, le lestage par le plomb permet également de faciliter le ferrage du poisson, le ferrage étant l'action qui permet d'engager la pointe de l'hameçon dans la gueule du poisson. Le principal problème posé par ce type de dispositif porte-plomb est que, du fait de la position excentrée de la boucle par rapport à l'axe longitudinal du corps, la patte peut casser au moment du lancer. En effet, compte-tenu de la masse du plomb et de la vitesse qu'il peut atteindre lors du lancer, l'énergie cinétique acquise par le plomb au moment du lancer est souvent telle que le lien permettant de solidariser la patte au porte-plomb ne résiste pas au lancer. Une telle rupture de la patte implique la perte du plomb pour le pêcheur, le plomb sombrant au fond de la rivière. Sans négliger l'impact négatif de la perte du plomb sur l'écosystème des poissons, la rupture du porte-plomb engendre également divers désagréments pour le pêcheur ; celui-ci doit en effet ramener le bas de ligne sur le bord de la rivière pour démonter le dispositif, remplacer le porte-plomb endommagé par un nouveau porte-plomb et remonter l'ensemble, en utilisant un nouveau plomb.

D'autre part, la forme cylindrique de la cavité de ce type de dispositif ne permet pas de bloquer l'émerillon dans la cavité, qui peut donc coulisser dans la cavité. Pour pêcher la carpe, en particulier, l'appât est maintenu à distance de l'hameçon par un fil, l'appât étant aspiré par le poisson avant l'hameçon. Ainsi, en l'absence de blocage de l'émerillon, lorsque l'appât est aspiré par le poisson, une longueur significative du bas de ligne peut être avalée par le poisson avant qu'il ne soit ferré, augmentant les risques à la fois de cassage de ligne et de fuite du poisson. Pour pallier cet inconvénient, il existe une variante de porte-plomb, sur laquelle la cavité dispose de deux trous opposés diamétralement sur le cylindre, qui permettent, au moyen d'une cheville, de bloquer l'émerillon dans la cavité. Cette amélioration est cependant jugée peu satisfaisante par les utilisateurs, du fait de la complexité du montage et de la nécessité d'introduire une pièce supplémentaire.

En outre, il n'est pas toujours aisé pour le pêcheur de disposer le capuchon souple sur l'extrémité du corps ; cette opération très méticuleuse peut par exemple être rendue difficile dans le contexte de conditions climatiques défavorables.

Enfin, avec les dispositifs porte-plomb connus, en cas de cassage de la ligne une fois que le poisson a été ferré, le poisson emporte avec lui uniquement le bas de ligne, l'hameçon et l'émerillon. En revanche, l'émerillon n'étant pas bloqué dans la cavité du porte-plomb, le porte-plomb et le plomb sombrent au fond de la rivière et ne sont pas emportés par le poisson.

### Objet et résumé de l'invention

La présente invention a pour but de répondre aux différents problèmes posés par les dispositifs porte-plomb existants tels que décrits précédemment. Ce but est atteint par le fait que l'invention porte sur un dispositif porte-plomb suivant la revendication 1, destiné à être fixé à une ligne de canne à pêche, comprenant un corps présentant un axe longitudinal, pourvu d'une première et d'une seconde extrémités et ouvert auxdites extrémités, ledit corps comprenant un tube de connexion, pourvu d'une ouverture traversante s'étendant selon l'axe longitudinal du corps et débouchant sur la première extrémité dudit corps, et une partie de fixation comprenant une première portion munie d'une patte formant une boucle, ladite patte étant constituée d'une première et d'une seconde extrémités, et une seconde portion munie d'une cavité débouchant sur la seconde extrémité dudit corps, ladite cavité communiquant avec l'ouverture traversante dudit tube de connexion, la première extrémité de ladite patte étant fixée à la deuxième portion de ladite partie de fixation, la seconde extrémité de ladite patte étant libre et s'étendant le long dudit tube de connexion. Ledit dispositif porte-plomb est tel que ladite cavité est déportée radialement par rapport à l'axe longitudinal dudit corps.

La cavité présente un axe longitudinal distinct de l'axe longitudinal du corps ; de préférence, l'axe longitudinal de la cavité est parallèle et distant de l'axe longitudinal du corps. Ainsi, ce dispositif porte-plomb permet de rapprocher radialement, par rapport à l'axe longitudinal du corps, la patte destinée à recevoir le plomb, et ainsi de mieux répartir la force exercée par le plomb au moment du lancer. Les risques de rupture de la patte s'en trouvent réduits, et le pêcheur peut utiliser des plombs plus lourds que ceux utilisés avec un dispositif porte-plomb habituel, permettant ainsi au montage comprenant le plomb, l'hameçon et l'appât d'être lancés plus loin du bord de la rivière que cela serait le cas, à efforts constants, avec un plomb moins lourd. L'utilisation de plombs plus lourds trouve également un intérêt dans le ferrage du poisson, tel que cela sera détaillé par la suite de la description. En outre, au moment du lancer, le plomb se trouve sensiblement aligné avec l'axe longitudinal du corps, améliorant ainsi la pénétration de l'ensemble dans l'air et, par conséquent, la longueur du lancer.

L'invention est déclinée ci-après dans une série de variantes de réalisation, qui peuvent être considérées seules ou en combinaison avec une ou plusieurs des précédentes.

Avantageusement, le corps est pourvu d'une rainure longitudinale débouchant au moins sur la surface extérieure dudit tube de connexion, la seconde extrémité de ladite patte pouvant s'engager dans ladite rainure longitudinale.

La présence de cette rainure permet à la patte de s'encastrer dans le corps et ainsi d'être solidarisée au corps du dispositif.

De manière avantageuse, ladite patte est souple de telle façon que la seconde extrémité de ladite patte peut être délogée de la rainure longitudinale dudit tube de connexion.

Cette caractéristique de la patte permet de fixer aisément un plomb au dispositif. En écartant la seconde extrémité de la patte, le pêcheur peut ainsi faire passer la patte à travers un élément de fixation disposé sur le plomb, par exemple un anneau de fixation.

De préférence, les première et deuxième portions de ladite partie de fixation sont disposées de part et d'autre d'un plan contenant l'axe longitudinal dudit corps.

Cette disposition des première et deuxième portions de la partie de fixation permet de répartir les forces exercées sur les différentes portions et ainsi d'améliorer la résistance de l'ensemble. Cela permet également d'améliorer l'équilibre des forces appliquées sur le dispositif porte-plomb par le plomb et par la ligne.

Avantageusement, la cavité et la boucle sont disposées de part et d'autre d'un plan contenant l'axe longitudinal dudit corps.

Cette disposition permet aux forces exercées d'une part sur l'émerillon contenu dans la cavité, d'autre part sur la boucle à laquelle est fixé le plomb, d'être réparties sur le dispositif porte-plomb. Au contraire du dispositif connu de l'art antérieur où la force exercée par le plomb au moment du lancer était quasi-exclusivement supportée par la patte, la force exercée par le plomb sur le dispositif selon l'invention est répartie sur les première et deuxième portions. En outre, au moment de la préparation du lancer, l'émerillon et le bas de ligne qui lui est attaché sont parallèles au plomb ; lorsque le pêcheur procède au lancer, cette disposition permet entre autres de limiter les risques que le bas de ligne, accroché à l'une des extrémités de l'émerillon, ne vienne s'emmêler autour du plomb.

De manière avantageuse, les première et deuxième portions de ladite partie de fixation présentent la même position axiale sur l'axe longitudinal dudit corps.

Avantageusement, les envergures des première et deuxième portions de ladite partie de fixation sont sensiblement identiques.

Par ces caractéristiques, le dispositif se distingue de l'art antérieur détaillé précédemment dans lequel la force exercée sur l'émerillon s'applique en une position de l'axe longitudinal du dispositif différente de la position en laquelle la force du plomb s'exerce sur la boucle ; les caractéristiques de la présente invention permettent ainsi de limiter les risques de rupture du dispositif, tout en améliorant la pénétration dans l'air de l'ensemble.

De préférence, la première extrémité de ladite patte s'étend depuis la seconde extrémité dudit corps.

De manière avantageuse, la section de ladite cavité décroit entre la seconde extrémité dudit corps et l'ouverture traversante dudit tube de connexion.

De préférence, mais non exclusivement, la cavité présente une forme conique. Le dimensionnement particulier de la cavité permet à la portion du corps de l'émerillon introduite dans la cavité d'être bloquée par la cavité. En effet, une fois que le montage comportant l'hameçon, l'appât et le plomb repose au fond de la rivière, le pêcheur tend la partie supérieure de la ligne en enroulant le fil lâche au moyen du moulinet de la canne à pêche ; le pêcheur exerce en outre une légère traction sur la partie supérieure de la ligne, de telle sorte que l'émerillon se trouve maintenu dans la cavité. La cavité est habituellement constituée d'une matière souple, pouvant se déformer pour bloquer l'émerillon. De ce fait, l'ensemble du dispositif, et le plomb en particulier, sont momentanément solidaires du bas de ligne et de l'hameçon. Le dispositif porte-plomb se distingue ainsi du dispositif connu de l'art antérieur, dans lequel la cavité présente une forme cylindrique, ne permettant pas d'empêcher le coulissement de l'émerillon engagé dans la cavité. Selon la présente invention, après avoir aspiré l'appât, le poisson aspire une partie du bas de ligne, jusqu'à atteindre l'hameçon. La présence du plomb, rendu solidaire du bas de ligne, exerce une résistance sur l'hameçon lorsque celui-ci est aspiré par le poisson. Sentant cette résistance, le poisson cherche habituellement à fuir ; la conjonction des forces exercées respectivement par le poids du plomb, par le pêcheur qui maintient en tension la partie supérieure de la ligne et par le poisson qui cherche à fuir permet à l'hameçon de s'engager dans la gueule du poisson. Par conséquent, l'utilisation de plomb de masse importante permet, entre autres choses, de faciliter le ferrage du poisson. Si la ligne vient à rompre une fois le poisson ferré, le poisson emporte avec lui l'ensemble constitué de l'hameçon, du bas de ligne, de l'émerillon, du dispositif porte-plomb et du plomb ; lorsque le plomb vient à se bloquer, par exemple au contact d'une pierre ou d'une branche présente au fond de la rivière, le poisson exerce une force suffisante pour libérer l'émerillon de la cavité du porte-plomb. Le poisson peut ainsi poursuivre sa fuite sans être entravé par le plomb ; il parviendra, par la suite, à rejeter l'hameçon, en développant, par exemple, un abcès, sa survie n'étant ainsi pas menacée. Ainsi, la forme de la cavité du dispositif porte-plomb selon l'invention permet, d'une part d'assurer un maintien de l'émerillon suffisant pour résister à l'aspiration du poisson lorsque celui-ci avale l'appât et le bas de ligne, d'autre part de permettre à l'émerillon d'être extrait de la cavité lorsque le fil a cassé et que le plomb est bloqué par un élément du relief du fond de la rivière.

De préférence, ladite partie de fixation a une forme de goutte.

De manière avantageuse, ledit tube de connexion est fileté.

Cette caractéristique du tube de connexion lui permet de coopérer avec un second élément fileté pour recouvrir l'extrémité libre de la patte qui s'étend le long du tube de connexion, et ainsi fermer l'extrémité du tube de connexion. Le filetage permet ainsi au second élément fileté de ne pas être désolidarisé du tube de connexion de manière inopinée ; au contraire du dispositif de l'art antérieur détaillé précédemment où un capuchon en matière déformable recouvre l'extrémité du corps, l'efficacité de la coopération du tube de connexion fileté avec le second élément fileté ne décroît pas à force d'utilisation. En outre, l'utilisation d'un filetage permet de faciliter le montage du dispositif.

Avantageusement, le dispositif porte-plomb comprend en outre un capuchon pourvu d'un orifice en son extrémité supérieure et destiné à recouvrir ledit tube de connexion afin de maintenir la seconde extrémité de ladite patte le long dudit tube de connexion, pour verrouiller ladite boucle.

La possibilité pour le tube de connexion de coopérer avec un capuchon percé permet à la fois de maintenir le plomb accroché à la boucle du dispositif et à la partie supérieure de la ligne, solidaire du moulinet de la canne à pêche, de traverser le tube de connexion pour être fixée à l'une des extrémités de l'émerillon.

De préférence et de manière non limitative, le capuchon sera formé dans une matière plastique, pouvant être souple ou rigide.

De préférence, le capuchon présente un filetage permettant au capuchon d'être vissé sur le tube de connexion du corps du dispositif porte-plomb.

Avantageusement, au moins l'un des éléments pris parmi la rainure longitudinale et la seconde extrémité de la patte comporte un moyen de blocage, tel qu'une patte souple, une portion faisant saillie ou un renflement, configuré pour maintenir la patte dans la rainure longitudinale ; un tel moyen de blocage constitue donc une sécurité supplémentaire pour assurer la solidité de la fixation du plomb, sans requérir, par exemple et selon une alternative non limitative, l'utilisation d'un capuchon percé. En effet, la répartition des forces dans le présent dispositif est telle que la seule coopération du corps et de la patte permet de maintenir le plomb accroché au dispositif. Par ailleurs, la présence du moyen de blocage permet de simplifier la production et l'utilisation du dispositif porte-plomb selon la présente invention.

Sans sortir du cadre de la présente invention, les dimensions du dispositif porte-plomb, et en particulier les dimensions de la rainure longitudinale et de la patte, peuvent être modifiées pour s'adapter à différents types de pêche, les contraintes subies par le dispositif porte-plomb étant différentes en fonction de la pratique de l'utilisateur.

De manière avantageuse, l'invention porte également sur un ensemble porte-plomb comprenant un dispositif porte-plomb selon l'invention et un émerillon pourvu d'une première et d'une deuxième extrémités, au moins une portion de l'émerillon étant logée dans ladite cavité, la première extrémité de l'émerillon étant liée à une première ligne qui s'étend à travers l'ouverture traversante dudit tube de connexion, et la seconde extrémité de l'émerillon étant liée à une seconde ligne destinée à être pourvue d'un hameçon.

La première ligne est constituée de la ligne dont au moins une portion est enroulée autour du moulinet de la canne à pêche ; la seconde ligne est constituée du bas de ligne, à l'extrémité duquel sont montés un hameçon et un appât.

De préférence, le diamètre de l'ouverture traversante du tube de connexion dudit dispositif porte-plomb compris dans l'ensemble porte-plomb est inférieur au diamètre dudit émerillon.

Cette caractéristique du diamètre de l'ouverture traversante permet à l'émerillon d'être maintenu bloqué dans le dispositif et d'ainsi solidariser le plomb au bas de ligne attaché à l'émerillon.

De manière avantageuse, enfin, l'ensemble porte-plomb comprend en outre un plomb, ledit plomb étant maintenu entre ladite patte et la deuxième portion de ladite partie de fixation.

### Brève description des dessins

D'autres caractéristiques et avantages de l'invention apparaîtront plus clairement et de manière complète à la lecture de la description ci-après d'un mode de réalisation préféré, donné à titre d'exemple non limitatif et en référence aux dessins annexés suivants sur lesquels :
- la figure **1** représente schématiquement un exemple de dispositif porte-plomb selon l'invention et un exemple de capuchon, dans une vue en perspective de dessus ;
- la figure **2** représente schématiquement un exemple de dispositif porte-plomb selon l'invention et un exemple de capuchon, dans une vue en perspective de dessous ; et
- la figure **3** représente schématiquement une vue en perspective de l'ensemble porte-plomb selon l'invention.

### Description détaillée de l'invention

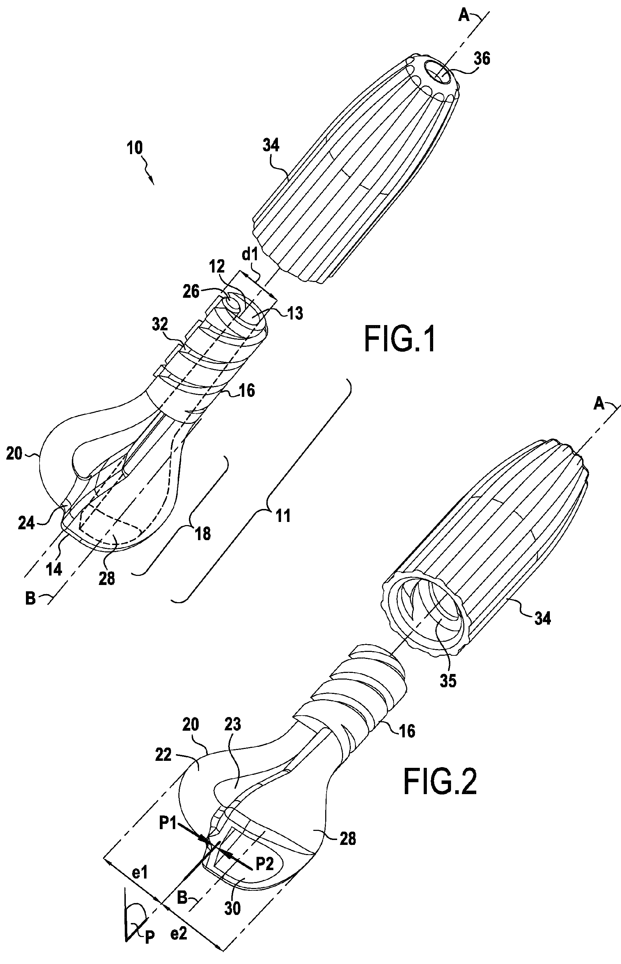

Dans l'exemple représenté dans une vue en perspective de dessus sur la figure **1****,** le dispositif porte-plomb **10** selon l'invention comprend un corps **11** présentant un axe longitudinal **A.** Le corps **11** est pourvu d'une première extrémité **12** et d'une seconde extrémité **14.** La première extrémité **12** est ouverte et la portion du corps **11** conduisant à cette extrémité **12** constitue un tube de connexion **16** pourvu d'une ouverture traversante **13.** L'ouverture de cette première extrémité **12** présente un diamètre noté **d1** sur cette figure. Tel que représenté sur la figure **2** que nous décrirons en détail par la suite, la seconde extrémité **14** est également ouverte et la portion du corps **11** conduisant à cette seconde extrémité **14** constitue une partie de fixation **18.**

La partie de fixation **18** comprend une première portion **20** et une seconde portion **28.**

La première portion **20** est composée d'une patte **22** formant une boucle **23.** Cette patte **22** est constituée de deux extrémités **24, 26.** La première extrémité **24** est celle par laquelle la patte **22** est solidaire du dispositif porte-plomb **10 ;** cette première extrémité **24** est liée à la seconde portion **28** de la partie de fixation **18.** La seconde extrémité **26** est libre.

Tel que représenté sur la figure **1****,** la seconde extrémité **26** de la patte **22** présente une section telle qu'elle peut s'engager dans une rainure longitudinale **32** formée sur le tube de connexion **16.** La patte **22** est composée d'une matière souple, de préférence mais non exclusivement de type plastique, permettant à sa seconde extrémité **26** d'être sortie de la rainure longitudinale **32** et d'être écartée de l'axe **A.** La patte **22,** maintenue fixée au dispositif porte-plomb **10** par sa première extrémité **24,** peut ainsi être déformée.

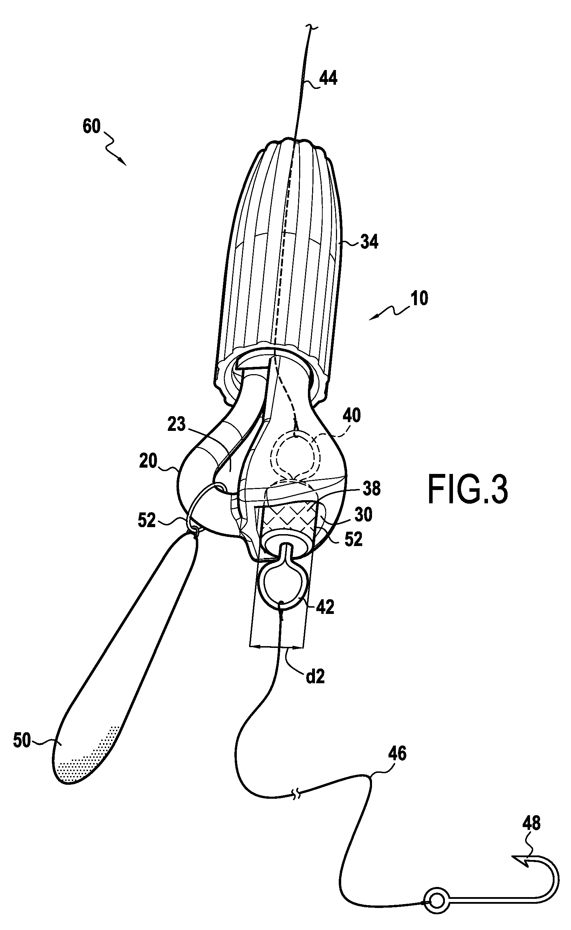

La seconde portion **28** de la partie de fixation **18** est pourvue d'une cavité **30** dont les caractéristiques apparaîtront plus clairement à l'observation des figures **2** et **3****.**

La figure **2** représente un exemple de dispositif porte-plomb **10** dans une vue en perspective de dessous.

La cavité **30** débouche sur la seconde extrémité **14** du corps **11** du dispositif. Cette cavité **30** est traversante et communique avec l'ouverture traversante **13** du tube de connexion **16 ;** la communication de la cavité **30** avec l'ouverture traversante **13** est représentée en traits pointillés sur la figure **1****.**

La cavité **30** présente un axe longitudinal **B.** Conformément à l'invention, la cavité **30** est déportée radialement par rapport à l'axe longitudinal **A** du corps **11 ;** en d'autres termes, les axes longitudinaux **A** du corps **11** et **B** de la cavité **30** ne sont pas coaxiaux. Tel que représenté sur les figures **1** et **2****,** les axes **A** et **B** sont distincts ; ils sont parallèles, la distance séparant les deux axes étant sensiblement égale à la moitié de l'envergure **e2** de la cavité **30,** telle qu'elle sera détaillée dans la suite de la description.

La déportation radiale de la cavité **30** par rapport à l'axe longitudinal **A** du corps **11** permet de rapprocher de l'axe longitudinal **A** la patte **22,** et par là même, la boucle **23.** Cette disposition permet d'améliorer la répartition des forces appliquées sur le dispositif porte-plomb **10,** sur la boucle **22** d'une part, et sur la cavité **30** d'autre part.

La figure **2** représente également un exemple non limitatif de capuchon **34,** destiné à recouvrir la première extrémité **12** du corps **11** et le tube de connexion **16.**

Dans l'exemple représenté sur la figure **2****,** le tube de connexion **16** présente un relief extérieur fileté. Il apparaît en outre sur cette figure que l'intérieur du capuchon **34** présente un filetage **35,** de telle façon que le capuchon **34** peut être vissé sur le tube de connexion **16.** Tel que détaillé précédemment, la seconde extrémité **26** de la patte **22** peut s'engager dans la rainure longitudinale **32** formée sur le tube de connexion **16,** de telle sorte que le vissage du capuchon **34** sur le tube de connexion **16** vient recouvrir également la seconde extrémité **26** de la patte **22.**

Il apparaît sur la figure **2** que la position axiale **P1** de la patte **22** est sensiblement identique à la position axiale **P2** de l'extrémité de la cavité **30** qui débouche sur la seconde extrémité **14** du dispositif **10.**

En outre, il apparaît également que l'envergure de la patte **22,** prise en son maximum et notée **e1**, est sensiblement égale à l'envergure de la cavité **30,** prise également en son maximum et notée **e2.**

La figure **3** représente une vue en perspective de l'ensemble porte-plomb **60.** En plus du dispositif porte-plomb **10** détaillé à l'observation des figures précédentes, l'ensemble porte-plomb **60** est également constitué d'un plomb **50** et d'un émerillon **38** dont une portion est encastrée dans la cavité **30.**

Dans l'exemple représenté sur la figure **3****,** l'émerillon **38** est constitué d'un corps cylindrique **52** pourvu de deux faces circulaires ; sur chacune des faces circulaires du cylindre **52,** un crochet **40, 42** est fixé, chacun des crochets **40, 42** constituant l'une des extrémités de l'émerillon **38.**

L'émerillon **38** est encastré dans la cavité **30** selon une direction longitudinale, de préférence coaxiale avec l'axe longitudinal **B** de la cavité **30.**

La section de la cavité **30** par laquelle l'émerillon **38** est introduit n'est pas nécessairement circulaire ; elle présente des dimensions telles que son diamètre est sensiblement égal au diamètre **d2** de l'émerillon **38,** voire éventuellement légèrement inférieur, afin que l'émerillon **38** puisse être maintenu dans la cavité **30.**

Le premier crochet **40,** constituant la première extrémité de l'émerillon **38,** est encastré dans la cavité **30** du dispositif porte-plomb **10** et apparaît donc en traits pointillés sur la figure **3****.** Le premier crochet **40** est lié à une ligne **44** fixée à une canne à pêche (non représentée sur la figure **3**).

Le second crochet **42,** constituant la seconde extrémité de l'émerillon **38,** dépasse de la cavité **30.** Tel que représenté sur l'exemple de la figure **3****,** il est lié au bas de ligne **46,** à l'extrémité duquel peut être fixé un hameçon **48** et un appât (non représenté).

Tel que détaillé précédemment, l'extrémité libre **26** de la patte **22** peut être écartée de l'axe longitudinal **A** du dispositif porte-plomb **10.** Cet écartement permet de faire passer un élément de fixation **52** disposé sur un plomb **50.** Dans l'exemple représenté et de manière non limitative, l'élément de fixation **52** prend la forme d'un anneau, dont le diamètre est supérieur au diamètre de la patte **22.**

Une fois l'anneau **52** enfilé dans la patte **22,** l'extrémité libre **26** est encastrée dans la rainure longitudinale **32.**

Le capuchon **34** recouvre par la suite le tube de connexion **16,** permettant de maintenir le plomb **50** accroché à la boucle **23.**

Tel que représenté sur la figure **1****,** le capuchon **34** présente un orifice **36,** de telle sorte que le capuchon **34** est traversant selon sa direction longitudinale.

Il s'ensuit que l'ensemble constitué par le bas de ligne **46,** l'émerillon **52** et la ligne **44** peut traverser le dispositif porte-plomb **10** sur lequel le capuchon **34** a été monté.

Une fois réalisé le montage tel que représenté sur la figure **3****,** le pêcheur peut procéder au lancer de l'ensemble constitué du dispositif porte-plomb **10,** du plomb **50,** de l'émerillon **38** et du bas de ligne **46** à l'extrémité duquel sont fixés l'hameçon **48** et l'appât. La canne à pêche tenue à deux mains, le pêcheur opère un mouvement de balancier de l'arrière vers l'avant, afin de projeter l'ensemble porte-plomb **60** vers la rivière.

Le lestage par le plomb **50** permet d'optimiser la longueur du lancer au regard de l'effort engagé par le pêcheur. Tel que représenté sur les différentes figures et en se référant de nouveau à la figure **1****,** l'extrémité **24** de la patte **22** se trouve sensiblement alignée avec l'axe longitudinal **A** du dispositif porte-plomb **10.** Par conséquent, le dispositif porte-plomb **10** lesté par le plomb **50** bénéficie d'une résistance de l'air réduite par rapport à un dispositif porte-plomb connu, sur lequel la patte à laquelle est accroché le plomb est excentrée par rapport à l'axe longitudinal du dispositif.

Tel que représenté sur la figure **2****,** les première **20** et deuxième **28** portions de la partie de fixation **18** sont disposées de part et d'autre d'un plan **P** contenant l'axe longitudinal **A** du corps **11.** De la même façon, la cavité **30** et la boucle **23** formée par la patte **22** sont disposées de part et d'autre du même plan **P.** Cette disposition particulière de part et d'autre du plan **P** permet de répartir les forces exercées sur le dispositif porte-plomb **10,** en particulier au moment du lancer ; ces forces sont constituées d'une part de la force exercée par le plomb **50** sur l'extrémité **24** de la patte **22,** et d'autre part de la force exercée par la ligne **44** sur l'émerillon **38** contenu dans la cavité **30.** Cette répartition des forces permet de réduire les risques de rupture du dispositif porte-plomb **10,** par rapport au dispositif connu de l'art antérieur.

Une fois que l'ensemble porte-plomb **60** atteint la surface de la rivière, le lestage par le plomb **50** lui permet de s'enfoncer dans l'eau, afin que l'hameçon **48** et l'appât (non représenté) puissent atteindre le fond de la rivière.

Une traction exercée par le pêcheur sur la ligne **44** permet d'engager le premier crochet **40** de l'émerillon **38** dans la cavité **30.** La section de la cavité **30** décroît entre la seconde extrémité **14** du corps **11,** et l'ouverture traversante **13** du tube de connexion **16,** le diamètre **d1** de l'ouverture du tube de connexion **16** étant inférieure au diamètre **d2** de l'émerillon ; en outre, la seconde portion **28** dans laquelle est formée la cavité **30** est constituée d'une matière déformable. Par conséquent, l'ensemble de ces caractéristiques permet au premier crochet **40** de l'émerillon **38** de se bloquer dans la cavité **30,** rendant ainsi le plomb **50,** fixé au dispositif porte-plomb **10,** solidaire de l'émerillon **38** et, par conséquent, du bas de ligne **46** et de l'hameçon **48.**

Ainsi, lorsque l'appât (non représenté) et l'hameçon **48** disposés sur le fond de la rivière sont aspirés par le poisson, le plomb **50,** solidaire de l'ensemble porte-plomb **60,** exerce une résistance suffisante sur le bas de ligne **46** pour que le poisson soit ferré par sa seule action sur le bas de ligne **46.**

Le pêcheur peut ensuite exercer une traction sur la ligne **44,** pour rapprocher vers le bord de la rivière l'ensemble porte-plomb **60,** auquel est désormais accroché le poisson.

Dans l'éventualité où la ligne **44** viendrait à rompre au cours de l'opération consistant à rapprocher le poisson du bord de la rivière, le poisson s'échapperait, avec l'hameçon **48** accroché à sa gueule, et lié au dispositif porte-plomb **10** toujours lesté du plomb **50.** Compte-tenu du relief accidenté du fond des rivières, le plomb serait rapidement bloqué, par exemple par une pierre ou une branche. La résistance exercée par le plomb **50** permettrait alors au poisson d'extraire l'émerillon **38** de la cavité **30,** et ainsi de désolidariser l'émerillon **38** du plomb **50.**

L'ensemble de la description ci-dessus est donné à titre d'exemple, et n'est donc pas limitatif de l'invention.

## Revendications

1. Dispositif porte-plomb (10), destiné à être fixé à une ligne de canne à pêche (44, 46), comprenant un corps (11) présentant un axe longitudinal (A), pourvu d'une première (12) et d'une seconde (14) extrémités et ouvert auxdites extrémités, ledit corps (11) comprenant un tube de connexion (16), pourvu d'une ouverture traversante (13) s'étendant selon l'axe longitudinal (A) du corps et débouchant sur la première extrémité (12) dudit corps (11), et une partie de fixation (18) comprenant une première portion (20) munie d'une patte (22) formant une boucle (23), ladite patte (22) étant constituée d'une première (24) et d'une seconde (26) extrémités, et une seconde portion (28) munie d'une cavité (30) débouchant sur la seconde extrémité (14) dudit corps (11), ladite cavité (30) communiquant avec l'ouverture traversante (13) dudit tube de connexion (16), la première extrémité (24) de ladite patte (22) étant fixée à la deuxième portion (28) de ladite partie de fixation (18), la seconde extrémité (26) de ladite patte (22) étant libre et s'étendant le long dudit tube de connexion (16), ledit dispositif (10) étant **caractérisé en ce que** ladite cavité (30) est déportée radialement par rapport à l'axe longitudinal (A) dudit corps.

2. Dispositif porte-plomb (10) selon la revendication **1, caractérisé en ce que** ledit corps (11) est pourvu d'une rainure longitudinale (32) débouchant au moins sur la surface extérieure dudit tube de connexion (16), la seconde extrémité (26) de ladite patte (22) pouvant s'engager dans ladite rainure longitudinale (32).

3. Dispositif porte-plomb (10) selon la revendication **2, caractérisé en ce que** ladite patte (22) est souple de telle façon que la seconde extrémité (26) de ladite patte (22) peut être délogée de la rainure longitudinale (32) dudit tube de connexion (16).

4. Dispositif porte-plomb (10) selon l'une quelconque des revendications **1** à **3, caractérisé en ce que** les première (20) et deuxième (28) portions de ladite partie de fixation (18) sont disposées de part et d'autre d'un plan (P) contenant l'axe longitudinal (A) dudit corps (11).

5. Dispositif porte-plomb (10) selon l'une quelconque des revendications **1** à **4, caractérisé en ce que** ladite cavité (30) et ladite boucle (23) sont disposées de part et d'autre d'un plan (P) contenant l'axe longitudinal (A) dudit corps (11).

6. Dispositif porte-plomb (10) selon l'une quelconque des revendications **1** à **5, caractérisé en ce que** les première (20) et deuxième (28) portions de ladite partie de fixation (18) présentent la même position axiale (P1, P2) sur l'axe longitudinal (A) dudit corps (11).

7. Dispositif porte-plomb (10) selon l'une quelconque des revendications **1** à **6, caractérisé en ce que** les envergures (e1, e2) des première (20) et deuxième (28) portions de ladite partie de fixation (18) sont sensiblement identiques.

8. Dispositif porte-plomb (10) selon l'une quelconque des revendications **1** à **7, caractérisé en ce que** la première (24) extrémité de ladite patte (22) s'étend depuis la seconde extrémité (14) dudit corps (11).

9. Dispositif porte-plomb (10) selon l'une quelconque des revendications **1** à **8, caractérisé en ce que** la section de ladite cavité (30) décroit entre la seconde extrémité (14) dudit corps (11) et l'ouverture traversante (13) dudit tube de connexion (16).

10. Dispositif porte-plomb (10) selon l'une quelconque des revendications **1** à **9, caractérisé en ce que** ladite partie de fixation (18) a une forme de goutte.

11. Dispositif porte-plomb (10) selon l'une quelconque des revendications **1** à **10, caractérisé en ce que** ledit tube de connexion (16) est fileté.

12. Dispositif porte-plomb (10) selon l'une quelconque des revendications **1** à **11, caractérisé en ce qu'**il comprend en outre un capuchon (34) pourvu d'un orifice (36) en son extrémité supérieure et destiné à recouvrir ledit tube de connexion (16) afin de maintenir la seconde extrémité (26) de ladite patte (22) le long dudit tube de connexion (16), pour verrouiller ladite boucle (23).

13. Ensemble porte-plomb (60) comprenant un dispositif porte-plomb (10) selon l'une quelconque des revendications **1** à **12** et un émerillon (38) pourvu d'une première (40) et d'une deuxième (42) extrémités, au moins une portion de l'émerillon (38) étant logée dans ladite cavité (30), la première extrémité (40) de l'émerillon (38) étant liée à une première ligne (44) qui s'étend à travers l'ouverture traversante (13) dudit tube de connexion (16), et la seconde extrémité (42) de l'émerillon (38) étant liée à une seconde ligne (46) destinée à être pourvue d'un hameçon (48).

14. Ensemble porte-plomb (60) selon la revendication **13, caractérisé en ce que** le diamètre (d1) de l'ouverture traversante (13) du tube de connexion (16) dudit dispositif porte-plomb (10) est inférieur au diamètre (d2) dudit émerillon (38).

15. Ensemble porte-plomb (60) selon la revendication **13** ou **14, caractérisé en ce qu'**il comprend en outre un plomb (50), ledit plomb (50) étant maintenu entre ladite patte (22) et la deuxième portion (28) de ladite partie de fixation (18).

## Patentansprüche

1. Bleihalterungsvorrichtung (10), die dazu bestimmt ist, an einer Schnur einer Angelrute (44, 46) befestigt zu werden, umfassend einen Körper (11), der eine Längsachse (A) aufweist, die mit einem ersten (12) und einem zweiten (14) Ende versehen ist und an den Enden offen ist, wobei der Körper (11) ein Anschlussrohr (16), das mit einer durchgehenden Öffnung (13) versehen ist, die sich entlang der Längsachse (A) des Körpers erstreckt und am ersten Ende (12) des Körpers (11) mündet, und ein Befestigungsteil (18) umfasst, das einen ersten Abschnitt (20), der mit einer Lasche (22), die eine Schleife (23) bildet, versehen ist, wobei die Lasche (22) von einem ersten (24) und einem zweiten (26) Ende gebildet ist, und einen zweiten Abschnitt (28) umfasst, der mit einem Hohlraum (30) versehen ist, der an dem zweiten Ende (14) des Körpers (11) mündet, wobei der Hohlraum (30) mit der durchgehenden Öffnung (13) des Anschlussrohrs (16) in Verbindung steht, wobei das erste Ende (24) der Lasche (22) an dem zweiten Abschnitt (28) des Befestigungsteils (18) befestigt ist, wobei das zweite ende (26) der Lasche (22) frei ist und sich entlang des Anschlussrohrs (16) erstreckt, wobei die Vorrichtung (10) **dadurch gekennzeichnet ist, dass** der Hohlraum (30) radial in Bezug zur Längsachse (A) des Körpers versetzt ist.

2. Bleihalterungsvorrichtung (10) nach Anspruch 1, **dadurch gekennzeichnet, dass** der Körper (11) mit einer Längsnut (32) versehen ist, die zumindest auf der Außenfläche des Anschlussrohrs (16) mündet, wobei das zweite Ende (26) der Lasche (22) in die Längsnut (32) eingreifen kann.

3. Bleihalterungsvorrichtung (10) nach Anspruch 2, **dadurch gekennzeichnet, dass** die Lasche (22) flexibel ist, so dass das zweite Ende (26) der Lasche (22) aus der Längsnut (32) des Anschlussrohrs (16) ausgelagert werden kann.

4. Bleihalterungsvorrichtung (10) nach einem der Ansprüche 1 bis 3, **dadurch gekennzeichnet, dass** der erste (20) und der zweite (28) Abschnitt des Befestigungsteils (18) beiderseits einer Ebene (P) angeordnet sind, die die Längsachse (A) des Körpers (11) enthält.

5. Bleihalterungsvorrichtung (10) nach einem der Ansprüche 1 bis 4, **dadurch gekennzeichnet, dass** der Hohlraum (30) und die Schleife (23) beiderseits einer Ebene (P) angeordnet sind, die die Längsachse (A) des Körpers (11) enthält.

6. Bleihalterungsvorrichtung (10) nach einem der Ansprüche 1 bis 5, **dadurch gekennzeichnet, dass** die ersten (20) und zweiten (28) Abschnitte des Befestigungsteils (18) dieselbe Axialposition (P1, P2) auf der Längsachse (A) des Körpers (11) aufweisen.

7. Bleihalterungsvorrichtung (10) nach einem der Ansprüche 1 bis 6, **dadurch gekennzeichnet, dass** die Ausmaße (e1, e2) der ersten (20) und zweiten (28) Abschnitte des Befestigungsteils (18) im Wesentlichen identisch sind.

8. Bleihalterungsvorrichtung (10) nach einem der Ansprüche 1 bis 7, **dadurch gekennzeichnet, dass** sich das erste (24) Ende der Lasche (22) von dem zweiten Ende (14) des Körpers (11) aus erstreckt.

9. Bleihalterungsvorrichtung (10) nach einem der Ansprüche 1 bis 8, **dadurch gekennzeichnet, dass** der Querschnitt des Hohlraums (30) zwischen dem zweiten Ende (14) des Körpers (11) und der durchgehenden Öffnung (13) des Anschlussrohrs (16) abnimmt.

10. Bleihalterungsvorrichtung (10) nach einem der Ansprüche 1 bis 9, **dadurch gekennzeichnet, dass** das Befestigungsteil (18) eine Tropfenform hat.

11. Bleihalterungsvorrichtung (10) nach einem der Ansprüche 1 bis 10, **dadurch gekennzeichnet, dass** das Anschlussrohr (16) mit Gewinde ist.

12. Bleihalterungsvorrichtung (10) nach einem der Ansprüche 1 bis 11, **dadurch gekennzeichnet, dass** sie ferner eine Kappe (34) umfasst, die an ihrem oberen Ende mit einer Öffnung (36) versehen ist und dazu bestimmt ist, das Anschlussrohr (16) zu bedecken, um das zweite Ende (26) der Lasche (22) entlang des Anschlussrohrs (16) zu halten, um die Schleife (23) zu verschließen.

13. Bleihalterungseinheit (60), umfassend eine Bleihalterungsvorrichtung (10) nach einem der Ansprüche 1 bis 12 und einen Wirbel (38), der mit einem ersten (40) und einem zweiten (42) Ende versehen ist, wobei mindestens ein Abschnitt des Wirbels (38) in dem Hohlraum (30) angeordnet ist, wobei das erste Ende (40) des Wirbels (38) mit einer ersten Leine (44) verbunden ist, die sich durch die durchgehende Öffnung (13) des Anschlussrohrs (16) erstreckt, verbunden ist, und wobei das zweite Ende (42) des Wirbels (38) mit einer zweiten Leine (46) verbunden ist, die dazu bestimmt ist, mit einem Angelhaken (48) versehen zu sein.

14. Bleihalterungseinheit (60) nach Anspruch 13, **dadurch gekennzeichnet, dass** der Durchmesser (d1) der durchgehenden Öffnung (13) des Anschlussrohrs (16) der Bleihalterungsvorrichtung (10) kleiner als der Durchmesser (d2) des Wirbels (38) ist.

15. Bleihalterungseinheit (60) nach Anspruch 13 oder 14, **dadurch gekennzeichnet, dass** sie ferner ein Blei (50) umfasst, wobei das Blei (50) zwischen der Lasche (22) und dem zweiten Abschnitt (28) des Befestigungsteils (18) gehalten wird.

## Claims

1. An angling rig lead clip (10) intended to be attached to a fishing rod line (44, 46), comprising a body (11) having a longitudinal axis (A), provided with first (12) and second (14) ends and open at said ends, said body (11) comprising a connecting tube (16) provided with a through-aperture (13) extending along the longitudinal axis (A) of the body and opening onto the first end (12) of said body (11), and an attachment portion (18) comprising a first portion (20) provided with a tab (22) forming a loop (23), said tab (22) consisting of first (24) and second (26) ends, and a second portion (28) provided with a cavity (30) opening onto the second end (14) of said body (11), said cavity (30) communicating with the through-aperture (13) of said connecting tube (16), the first end (24) of said tab (22) being attached to the second portion (28) of said attachment portion (18), the second end (26) of said tab (22) being free and extending along said connecting tube (16), said clip (10) being **characterized in that** said cavity (30) is radially displaced with respect to the longitudinal axis (A) of said body.

2. The angling rig lead clip (10) according to claim 1, **characterized in that** said body (11) is provided with a longitudinal groove (32) at least opening onto the outer surface of said connecting tube (16), the second end (26) of said tab (22) being able to engage into said longitudinal groove (32).

3. The angling rig lead clip (10) according to claim 2, **characterized in that** said tab (22) is flexible so that the second end (26) of said tab (22) may be detached from the longitudinal groove (32) of said connecting tube (16).

4. The angling rig lead clip (10) according to any one of claims **1** to **3, characterized in that** the first (20) and second (28) portions of said attachment portion (18) are positioned on either side of a plane (P) containing the longitudinal axis (A) of said body (11).

5. The angling rig lead clip (10) according to any one of claims **1** to **4, characterized in that** said cavity (30) and said loop (23) are positioned on either side of a plane (P) containing the longitudinal axis (A) of said body (11).

6. The angling rig lead clip (10) according to any one of claims **1** to **5, characterized in that** the first (20) and second (28) portions of said attachment portion (18) have the same axial position (P1, P2) on the longitudinal axis (A) of said body (11).

7. The angling rig lead clip (10) according to any one of claims **1** to **6, characterized in that** the spans (e1, e2) of the first (20) and second (28) portions of said attachment portion (18) are substantially identical.

8. The angling rig lead clip (10) according to any one of claims **1** to **7, characterized in that** the first end (24) of said tab (22) extends from the second end (14) of said body (11).

9. The angling rig lead clip (10) according to any one of claims **1** to **8, characterized in that** the section of said cavity (30) decreases between the second end (14) of said body (11) and the through-aperture (13) of said connecting tube (16).

10. The angling rig lead clip (10) according to any one of claims **1** to **9, characterized in that** said attachment portion (18) is drop-shaped.

11. The angling rig lead clip (10) according to any one of claims **1** to **10, characterized in that** said connecting tube (16) is threaded.

12. The angling rig lead clip (10) according to any one of claims **1** to **11, characterized in that** it further comprises a cap (34) provided with an orifice (36) in its upper end and intended to cover said connecting tube (16) in order to maintain the second end (26) of said tab (22) along said connecting tube (16), for locking said loop (23).

13. An angling rig lead assembly (60) comprising an angling rig lead clip (10) according to any one of claims **1** to **12,** and a swivel (38) provided with first (40) and second (42) ends, at least one portion of the swivel (38) being housed in said cavity (30), the first end (40) of the swivel (38) being bound to a first line (44) which extends through the through-aperture (13) of said connecting tube (16), and the second end (42) of the swivel (38) being bound to a second line (46) intended to be provided with a fishhook (48).

14. The angling rig lead assembly (60) according to claim **13, characterized in that** the diameter (d1) of the through-aperture (13) of the connecting tube (16) of said angling rig lead clip (10) is smaller than the diameter (d2) of said swivel (38).

15. The angling rig lead assembly (60) according to claim **13** or **14, characterized in that** it further comprises a lead sinker (50), said lead sinker (50) being maintained between said tab (22) and the second portion (28) of said attachment portion (18).
